Europäisches Patentamt

European Patent Office

Office européen des brevets

(19)

(11) **EP 0 702 299 A1**

(12) **EUROPEAN PATENT APPLICATION**

(43) Date of publication:
20.03.1996 Bulletin 1996/12

(51) Int Cl.6: **G06F 11/00**

(21) Application number: 95306217.1

(22) Date of filing: **06.09.1995**

(84) Designated Contracting States:
**DE FR GB**

(30) Priority: **16.09.1994 US 308039**

(71) Applicant: **AT&T Corp.**
**New York, NY 10013-2412 (US)**

(72) Inventor: **Ladd, David Alan**
**Batavia, Illinois 60510 (US)**

(74) Representative:
**Watts, Christopher Malcolm Kelway, Dr. et al**
**AT&T (UK) Ltd.**
**5, Mornington Road**
**Woodford Green Essex, IG8 0TU (GB)**

(54) **Detection of modifications in computer programs**

(57)   The invention concerns the comparison of an original version of a computer program with a modified version. The invention enumerates the dependency relations of each program, and compares them. If they are identical, then the input-output relations of both programs are taken to be the same, so that the modifications of the program are shown to leave the underlying logic unchanged.

*FIG. 1*

```
DERIVE SETS OF DEPENDENCIES
FOR PROGRAM A
 - FOR ASSIGNMENT STATEMENTS
 - FOR IF STATEMENTS
 - FOR WHILE STATEMENTS
           |
           v
DERIVE SETS OF DEPENDENCIES
FOR PROGRAM B
 - FOR ASSIGNMENT STATEMENTS
 - FOR IF STATEMENTS
 - FOR WHILE STATEMENTS
           |
           v
COMPARE SETS FOR A WITH B
           |
           v
SUMMARIZE DIFFERENCES
```

## Description

### Background of The Invention

For various reasons, it is almost inevitable that computer software will be changed during its lifetime. However, it is difficult to predict all ramifications of the changes, because of the levels of complexity which some software can attain.

One prior-art approach compares original software with the modified version, on a line-by-line basis, and reports the differences. While this approach is accurate in reporting all changes in the software, it suffers the disadvantage of reporting all changes, whether or not the changes make a difference. An analogy can illustrate the problem.

The statement, "I drove my car to the store," contains almost identical information as the statement, "Under my control, my car conveyed me to the supermarket." Comparing the statements word-by-word would detect numerous differences, even though the two statements are nearly identical in meaning.

Comparing two versions of software in the same way presents a similar problem.

### Summary of The Invention

In one form of the invention, an analysis computer program identifies variables contained in two versions of another program, and lists the dependences of the variables in each. The analysis program then compares the dependences, and lists the differences.

### Brief Description of The Drawing

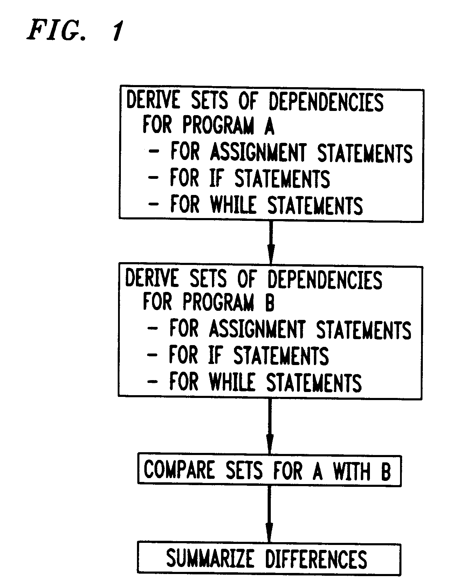

Figure 1 is an overview of one form of the invention.

### Detailed Description of The Invention

It is perhaps easiest to explain the invention by way of examples. The first examples will explain the concepts of (1) dependences and (2) modification of a variable.

### Example 1

Procedure 1, given below, is written in the language C++. Line 1 establishes preliminary matters, and is required by the language C++, but not relevant to the invention. Line 2 inquires whether the variable x is not equal to the variable HI. (The expression != means "is not equal.")

If inequality is found, then "x" is added to TOT, in line 2. If not, then DEF is added to TOT, in line 3.

### Procedure 1

```
1        void add (int x) {
2             if (x != HI) {TOT = TOT + x;
3             else TOT = TOT + DEF;}
```

Procedure 1 can be expressed in English as follows:
If x is not equal to HI, then TOT = TOT + x
If x equals HI, then TOT = TOT + DEF

### Dependencies

In Procedure 1, the following dependencies, or dependence relations, exist:

| (TOT, TOT) | (TOT, x) | (TOT, DEF) | (TOT, HI) |
|------------|----------|------------|-----------|
| (x, x)     | (DEF, DEF) | (HI, HI) |           |

In each pair, such as (TOT, x), the first term (TOT) is dependent on the second term (x). This pair can be read as "TOT depends on x."

As to the dependency relationship, a change in "x" may, but need not, change the value of TOT. For example, assume that the variables have the following values initially:

| Example 1 | |
|---|---|
| Variable | Value |
| TOT | 2 |
| x | 5 |
| HI | 6 |
| DEF | 8 |

After the procedure runs, TOT acquires the value 7 (ie, because x does not equal HI, the expression TOT = TOT + x is evaluated, which equals 2 + 5).

TOT has four dependencies, as the list of dependencies given above indicates. TOT depends on

1. Its original value (TOT, TOT).

2. "x", as in (TOT, x), because of the expression TOT = TOT + x.

3. HI, as in (TOT, HI), because of the comparison "IF ( x != HI )". That is, TOT depends on the condition, and the condition depends on HI.

4. DEF, as in (TOT, DEF). That is, if the condition is not valid, then TOT = TOT + DEF.

As to dependency number 4, TOT depends on DEF, even though DEF did not actually influence the final value of TOT in this particular Example. The fact that DEF could exert an influence is sufficient to establish dependence, as the following Example will illustrate. This Example assumes different values of the variables.

| Example 2 | |
|---|---|
| Variable | Value |
| TOT | 2 |
| x | 5 |
| HI | 5 |
| DEF | 8 |

Since x equals HI, the expression TOT = TOT + DEF becomes operative. Thus, at the end of the procedure, TOT has the value 10 (ie, TOT = TOT + DEF = 2 + 8). TOT clearly can depend on DEF. The possibility of dependence is sufficient to establish dependency.

Therefore, a simplified working definition of "dependence" is that a first variable is dependent on a second variable if the second variable can change either (a) the processing which the first variable undergoes or (b) the value of the first variable, or both. A change of type (a) is called a "control" dependence, and of type (b) is called a "data" dependence.

The invention generates a list of dependencies for each version of a program and compares the lists. Differences in the lists indicate semantic differences in the two versions of the programs. An Example will illustrate.

**Listing of Dependencies and Comparison**

The basic idea behind Procedure 2, below, is to invert the logic of the Procedure 1, above. Procedure 1 asks "Is x not equal to HI ?" and, if inequality exists, adds TOT to x. Otherwise, Procedure 1 adds TOT to DEF.

Procedure 2 intends to ask the logical inverse: "Is x equal to HI ?" and, if it is, adds TOT to DEF. Otherwise, Procedure 2 adds TOT to x.

The basic logic is the same in both cases, but the execution is slightly different.

**Procedure 2**

```
1        void add (int x) {
2                if (x = HI) {TOT = TOT + DEF;
3                else TOT = TOT + x;}
```

In Procedure 2, a syntax error has been made, in the first equality sign in line 2. This equality sign (in the expression x = HI) acts as the condition for the IF-statement, as expected. However, the equality sign has an unexpected effect, which is the source of the error: the C++ language treats the equality sign as an assignment operator, and sets x equal to HI.

Thus, the condition "IF (x = HI)" actually does two things. One, it sets "x" equal to HI. Two, it asks whether x equals ZERO.

If HI equals ZERO, then, of course, x will equal ZERO, because of the assignment operation, and the condition will be true. Conversely, if HI does not equal ZERO, then x will not equal ZERO, and the condition will fail.

(In C++, if the user simply wished to use "x = HI" as the condition, without acting as an assignment, the user would use two equality signs, namely "==".)

Because of the assignment now contained within the condition, the dependences of the procedure have changed, because the logic has changed. The following set of dependencies now exists:

| (TOT, TOT) | (TOT, DEF) | (TOT, HI) |
| (x, HI) | (DEF, DEF) | (HI, HI) |

An important difference is that x no longer depends on itself: (x, x) is absent. The reason is that, in line 2, x is assigned the value of HI. In this connection, a subtle difference is emphasized: In the pair (x, x), the two "x's" are not strictly the same. The second "x" refers to the original value of "x", namely, that of "x" coming into the procedure. The first "x" refers to the final value of "x", namely, that of "x" after the procedure occurs.

The pair (x, x) can be read as "The final value of 'x' can be modified by the original value of 'x', but need not be." With this understanding, it is clear that the final value of "x" does not depend on the original value. In all cases, the final value of "x" depends on HI, because of the assignment statement in line 2, and never on the original value of "x". Thus, the dependency (x, x) has been eliminated.

Restated, in effect, "x" has become an intermediate variable, because the final value of "x" never depends on the initial value of "x". The final value always depends on HI. Further, the dependency (TOT, x) has been eliminated: TOT no longer depends on x. The reasoning is that

TOT depends on "x",
"x" depends on HI, and so
"TOT" depends on HI.

Still further, a new dependency has been added: (x, HI). "x" now depends on HI, whereas in Procedure 1, "x" did not. Variable x depends on HI because "x" is assigned the value HI.

Therefore, the syntax error changed the set of dependencies, even though the underlying logic was intended to be the same in both Procedures.

**Comparison**

The invention compares the sets of dependencies for both Procedures, and reports the differences. In these two examples, the report will state the following:

new version removes dependencies: x on x, TOT on x
new version adds dependencies: x on HI

This report serves to warn a person comparing the two versions that the modification has changed the operation of the procedures.

**The Invention's Approach to Listing Dependencies**

The invention derives the list of dependencies by applying the following Rules to the program in question. The operation of the Rules will be explained by examples which follow.

Rule 1        D(S;T) = D(T) o D(S)

Rule 2        D(if (CONDITION) S else T) = D(S) U D(T) U [M(S) U M(T)} x {CONDITION}

Rule 3        D(while (CONDITION) S) = D(S)* U ((M(S) X {CONDITION}) o D(S)*)

Rule 4        M(S;T) = M(S) U M(T)

Rule 5        M(if (CONDITION) S else T) = M(S) U M(T)

Rule 6        M(while (CONDITION) S) = M(S)

The six Rules employ Four operators, namely, o, U, X, and *, which will be explained in the following example. The operator "o" is defined as relational composition. The operator "U" is defined as union of sets. The operator "X" is defined as the Cartesian Product. The operator "*" is defined as transitive closure.

Rule 1 may be read as "D of S-followed-by-T equals D of T composed with D of S." The other Rules may be read in similar ways.

## Example

The following is a simple program, which contains six statements, S1 - S6, which may be grouped into three categories. This discussion will first explain the operation of the statements in each category, and then apply the Rules given above, in order to derive the dependency relations:

Category 1 Four Assignment Statements

| | |
|---|---|
| S1 | a = VAL1; // $D_1$ = { (a, VAL1) } $M_1$ = { a } |
| S2 | b = VAL2; // $D_2$ = { (b, VAL2) } $M_2$ = { b } |
| S3 | c = VAL3; // $D_3$ = { (c, VAL3) } $M_3$ = { c } |
| S4 | d = VAL4; // $D_4$ = { (d, VAL4) } $M_4$ = { d } |

The statements are written in the C++ convention. The double lashes (//) indicate the beginning of a comment.

Each statement assigns a value (eg, VAL1, VAL2) to a variable (eg, a, b). For example, statement S1 assigns the value VAL1 to the variable a. The variable a is set equal to VAL1.

The comment following each statement indicates the dependencies contained in the assignment statement. For example, in S1, the variable "a" depends on VAL1, as indicated by the ordered pair (a, VAL1), in the comment. This type of dependency is self-evident from the assignment, and can be called RULE ZERO dependency.

(In general, the dependencies consist of a SET of ordered pairs, such as { (r, s), (t, u), (v, w) }. However, in these simple assignment statements, each statement contains only a SINGLE ordered pair, instead of a set of pairs.)

The comment also indicates the variables which may be modified by the statement. For example, in S1, "a" is potentially modifiable. That is, the value of "a" after the statement is executed may be different than the value of "a" prior to the execution. Restated, the statement may change the original value of "a".

Category 2 - IF-Statement

```
S5    if( c > d) {
          e = a; // D₅ = { (e, a) } M₅ = { e }
      } else {
          e = b; // D₆ = { (e, b) } M₆ = { e }
      }


S5 (repeated without comments)  if(c > d) {e = a;} else {e
= b}
```

Two versions of Statement S2 are given. One includes comments, the other eliminates comments.

This statement inquires whether "c" exceeds "d" in value. If so, "e" is set equal to "a"; if not, "e" is set equal to "b".

There are two dependencies. Dependency D5 is that "e" depends on "a": "a" can change the value of "e". Dependency D6 is that "e" depends on "b": "b" can change the value of "e".

The modifiable variables are as indicated: The sets $M_5$ and $M_6$ both consist of "e".

Category 3 - WHILE Statement

```
S6    while( a < b ) {
          c = c + 1;   //D₇ = { (c, c) } M₇ = { a }
          a = a + 1;   //D₈ = { (a, a) } M₈ = { a }
      }


S6 (repeated without comments) while ( a < b ) {
          c = c + 1; a = a + 1;
      }
```

This statement inquires whether a is less than b. So long as this condition occurs, both a and c are each incremented by the value one.

The sets of dependencies and modifiable variables are as indicated.

**Obtaining Dependencies and Modifications S1 through S4**

We begin by applying Rule 1 to S1, the first assignment statement. Rule 1 states:

$$D(S;T) = D(T) \circ D(S)$$

In this case, "T" refers to the statement in S2 "b = VAL2" and "S" refers to the statement in S1 "a = VAL1". The procedure progresses as follows (line numbers A, B, etc. have been added for reference).

```
A          D ("a = VAL1" ; "b = VAL2") =
B              D("a = VAL1") o D("b = VAL2") =
C              { (a, VAL1) } o { (b, VAL2) } =
D              { (a, VAL1), (b, VAL2) }
```

**Relational Composition - Basic Concept**

Key information is contained in line C. Relational composition is undertaken between two pairs of dependencies. Relational composition, in effect, eliminates "intermediate" elements, based on transitivity.

For example, if
  m depends on n and
  n depends on p, then
  m depends on p.
Relational composition combines the two ordered pairs
  (m, n), indicating that m depends on n, and
  (n, p), indicating that n depends on p,
into the single ordered pair
  (m, p), indicating that m depends on p.
As a result of the composition, recording of the relationship (n, p) has been eliminated, as being superfluous. The reason is that the invention is interested in the overall dependences of output variables upon input variables, and not on intermediate dependences, of which (n, p) is one type.

**Relational Composition - Mathematical Definition**

Relational composition is defined as follows:

$$D_1 \circ D_2 : \{ \; (a, b) \quad | \quad (a, b) \in D_2 \text{ AND } (b, x) \notin D_1$$
$$\text{OR}$$
$$(a, b) \in D_1 \text{ AND } (a, x) \notin D_2$$
$$\text{OR}$$
$$(a, x) \in D_2 \text{ AND } (x, b) \in D_1 \; \}$$

To apply this definition, one does the following. First, list all possible pairs of variables, taken from both sets $D_1$ and $D_2$, including pairing variables with themselves (eg, (m, m)).

Next, for each pair, apply the definition. (In applying the definition, each variable in the pair will temporarily be given the label "a" or "b", for consistency with the definition.) In applying the definition, three inquiries are made, according to the three components of the OR-statement contained in the definition.

First Inquiry

First, ask a two-part question: (1) Whether the pair is a pair contained in $D_2$. (This question corresponds to the expression "(a, b) $\in D_2$"). (2) Whether any other variable can be (i) found in either $D_1$ or $D_2$ and (ii) paired with "b", to form a pair (b, x) which is NOT contained in $D_1$. (This question corresponds to the expression "(b, x) $\notin D_1$"). If the answer to both parts is YES, then the pair (a, b) becomes part of the composed set. If either answer is NO, then proceed to the second inquiry.

Second Inquiry

First, ask a two-part question: (1) Whether the pair is a pair contained in $D_1$. (This question corresponds to the expression "(a, b) $\in D_1$"). (2) Whether any other variable can be (i) found in either $D_1$ or $D_2$ and (ii) paired with "a", to form a pair (a, x) which is NOT contained in $D_2$. (This question corresponds to the expression "(b, x) $\notin D_2$"). If the answer to both parts is YES, then the pair (a, b) becomes part of the composed set. If either answer is NO, then proceed to the third inquiry.

Third Inquiry

Ask a two-part question. (1) Whether any other variable can be (i) found in either $D_1$ or $D_2$ and (ii) paired with "a", to form a pair (a, x) which is contained in $D_2$. (This question corresponds to the expression "(a, x) $\in D_2$"). (2) Whether any other variable can be (i) found in either $D_1$ or $D_2$ and (ii) paired with "b", to form a pair (x, b) which is contained in $D_1$. (This question corresponds to the expression "(x, b) $\in D_1$".)
If the answer to both parts is YES, then (a, b) becomes a member of the composed set.

**Relational Composition - How to Execute**

A simplified mechanistic approach to performing relational composition is the following. (This approach is not exhaustive, and does not produce full composition, but is useful as an explanatory approach.)

First, take two ordered pairs:

(m, n) - the first and

(n, p) - the second.

In the mechanistic approach, compare the right element of the second (the "p") with the left element of the first (the "m"). If they match, then composition is possible. In this case, there is no match, so the composition is the union of the two sets:

$$\{ (m, n) \} \cup \{ (n, p) \} =$$
$$\{ (m, n), (n, p) \}.$$

However, if the ordered pairs are taken in the opposite order, namely,

(n, p) - the first and

(m, n) - the second,

then, applying the mechanistic rule indicates that the right element of the second (the "n") matches the left element of the first (the "n"). Now composition is possible.

Composition is obtained by replacing the left element of the first (the "n") with the left element of the second (the "m"), and dropping the second entirely. The result is (m, p), as expected: "m" depends on "p" by transitivity through "n".

## Further Points on Relational Composition

When multiple sets of dependencies exist, relational composition is done pairwise. The dependencies of one pair are composed (if possible). In this case, composing the dependencies of S1 and S2 produces the result { (a, VAL1), (b, VAL2) }. It is noted that no composition occurred, and the result is the union of the two dependencies.

Then, the composed dependencies of the pair are composed with another set, and so on.

The Inventors point out that order is important: the relational composition

first o second

[or, more precisely, { (m, n) } o { (n, p) } ]

is not the same as

second o first

[more precisely, { (n, p) } o { (m, n) } ].

One reason is that, in a computer program, an earlier statement does not depend upon a later statement. For example, consider the following Procedure 3:

## Procedure 3

$$r = s$$
$$s = t$$
$$t = u$$

It may appear, at first, that "r" depends on "u", but such is not the case, as the reader can show by substituting arbitrary numbers for the variables, and recognizing that the steps are executed from top-to-bottom. However, if the order is changed, as in Procedure 4, then "u" does depend on "r".

## Procedure 4

$$t = u$$
$$s = t$$
$$r = s$$

In Procedure 4, "r" does depend on "u".

Thus, in applying composition, one first composes a pair of the earliest-executed statements (S1 and S2 in this example). Further, the composition is done in the order stated in Rule 1, wherein S refers to the earlier statement, and T refers to the later statement.

Then, the result of this composition is composed with the subsequent statement, wherein the subsequent statement acts as T in Rule 1, and so on.

The composition is done pairwise, beginning with the earliest pairs. The result is paired with the next set, and so on.

## Results of Composition of Category 1

According to the above rules, the composition of the dependencies of S1 and S2, namely, the set

$$\{ (a, VAL1), (b, VAL2) \}$$

is composed with the set of dependencies of S3. The expression is { (a, VAL1), (b, VAL2) } o { (c, VAL3) } which reduces to

$$\{ (a, VAL1), (b, VAL2), (c, VAL3) \}.$$

Finally, this result is composed with the last dependency, that of S4. The expression is

$$\{ (a, VAL1) , (b, VAL2), (c, VAL3) \} o \{ (d, VAL4) \}$$

which reduces to

$$\{ (a, VAL1), (b, VAL2), (c, VAL3), (d, VAL4) \}.$$

Therefore, the set of dependencies obtained from statements S1 through S4 is this:

$$D = \{ (a, VAL1), (b, VAL2), (c, VAL3), (d, VAL4) \}.$$

This agrees with common-sense: in looking at S1 through S4, one sees that "a" depends on VAL1, and on nothing else; "b" depends on VAL2, and nothing else, and so on.

The modifiable variables are obtained from Rule 4, which stipulates a union of sets of modifiable variables for the statements. In this example, the union is the following:

$$M = \{ a, b, c, d \}$$

## Obtaining Dependencies and Modifications S5 : The IF - Statement

Rule 2 is used, and repeated here:

$$D \ (if \ (CONDITION) \ S \ else \ T) = D(S) \ U \ D(T) \ U \ [M(S) \ U \ M(T)] \ x \ \{CONDITION\}$$

Rule 2 is applied to Statement S5, which is also repeated:

```
S5    if( c > d) {
          e = a; // D₅ = { (e,a) } M₅ = { e }
      } else {
          e = b; // D₆ = { (e,b) } M₆ = { e }
      }
S5 (repeated without comments)  if(c > d) {e = a;} else {e
= b}
```

In applying Rule 2 to S5, one proceeds through the following steps.

```
A    D( "if(c > d) e = a; else e = b;") =
B        D("e = a") U D ("e = b") U (M( e = a") U M("e =
b))
         x ("c = d") =
C        { (e,a) } U { (e,b) } U { e X {c,d} } =
D        { (e,a), (e,b), (e,c), (e,d) }
```

Step A substitutes the IF-statement of S5 for the operand of D in Rule 2. In S5, "(c > d)" is the CONDITION of Rule 2.
Step B takes expressions from S5 and substitutes them for the variables S, T, and CONDITION in Rule 2.
Step C is a simplification of line B.
Step D is a simplification of line C, and provides the dependencies of the IF-statement. These dependencies agree with common sense: in the expression "if c is greater than d, then e equals a, otherwise e equals b", e is clearly dependent upon all of a, b, c, and d, as stated in Step D.

## Modifiable Variables in S5

Rule 5 applies to IF-statements, and is repeated here:
Rule 5        M(S;T) = M(S) U M(T)
The IF-statement, S5, is repeated also:

```
S5    if( c > d) {
            e = a; // D₅ = { (e,a) } M₅ = { e }
      } else {
            e = b; // D₆ = { (e,b) } M₆ = { e }
      }
```

In applying Rule 5 to S5, one proceeds through the following steps.

```
E     M( "if(c > d) e = a; else e = b;") =
F           M("e=a") U M("e=b")  =
G           { e } U { e } =
H           { e }
```

Step E replaces the operand of M with the IF-statement.

Step F takes expressions from S5 and substitutes them into Rule 4.

Step G is a simplification of line F, through applying RULE ZERO.

Step H is a simplification of line G, through applying laws of set theory.

The result is that "M" is a set containing the variable "e". This accords with common sense: the variable which is modifiable by the procedure is "e". None of the other variables are modified by S5.

At this point, two sets of dependencies have been derived, one for the four assignment statements, S1 - S4, and one for the IF-statement, S5. They are repeated here:

$$D \text{ ( four assignments )} = \{ (a, VAL1), (b, VAL2), (c, VAL3), (d, VAL4) \}$$
$$D( \text{ IF-statement )} = \{ (e,a), (e,b), (e,c), (e,d) \}$$

Also, two sets of modifiable variables have been derived for these statements, they are repeated also:

$$M( \text{ four assignments )} = \{ a, b, c, d \}$$
$$M( \text{ IF-statement )} = \{ e \}.$$

Rule 1 states that these sets of dependencies can be combined according to the rules of relational composition. Rule 4 states that these sets of modifiable variables can be combined by union of the sets.

Applying Rule 1 gives

```
A     D( four assignments ; if-statement ) =
B           {four assignments} o {if-statement} =
C           { (a, VAL1), (b, VAL2), (c, VAL3), (d, VAL4) } o
                { (e, a), (e, b), (e, c), (e, d) ) =
D           { (a, VAL1), (b, VAL2), (c, VAL3), (d, VAL4),
                (e, VAL1), (e, VAL2), (e, VAL3), (e, VAL4) }
```

Step A substitutes words for S and T in Rule 1.

Step B restates Step A in different notation.

Step C substitutes the sets of variables into Step B.

Step D is a simplification of line C. Step D is attained by the mechanistic approach to relational composition, given above. It is noted that the mechanistic approach produces the following compositions, which eliminate the three pairs [ (c,a), (a,b), and (c,b) ]:

$$\{ (a, VAL1) \} o \{ (c, a) \} = \{ (c, VAL1) \}$$
$$\{ (b, VAL2) \} o \{ (a,b) \} = \{ (a, VAL2) \}$$
$$\{ (b, VAL2) \} o \{ (c,b) \} = \{ (c, VAL2) \}$$
$$\{ (b, VAL2) \} o \{ (c, b) \} = \{ (c, VAL2) \}$$

Therefore, Step D sets forth the set of dependency relations computed so far. According to Rule 4, the set of modifiable variables is the union of the sets. The set of modifiable variables computed so far is

$$\{ a, b, c, d \} U \{ e \} =$$

{ a, b, c, d, e }

**Obtaining Dependencies and Modifications S6 : The WHILE - Statement**

Rule 3 is used, and is repeated here:

Rule 3      D(while (CONDITION) S) = D (S) * U ( (M(S) X {CONDITION})      o D(S)*)

Rule 3 is applied to Statement S6, which is also repeated:

```
S6    while( a < b ) {
            c = c + 1;  //D₇ = { (c, c) } M₇ = { a }
            a = a + 1;  //D₈ = { (a, a) } M₈ = { a }
      }
```

```
S6 (repeated without comments) while ( a < b ) {
            c = c + 1; a = a + 1;
      }
```

First, the dependencies of the body of the WHILE-statement must be derived. Since the body contains two assignment statements, Rule 1 is applied to them:

```
A     D( body of while loop ) =
B         D("a = a + 1" ; "c = c + 1") =
C         D("a = a + 1") o D("c = c + 1") =
D         { (a, a) } o { (c, c) } =
E         { (a, a), (c, c) }
```

Step E provides the dependencies, which accord with common sense: neither "a" nor "c" depend on the other.

In applying Rule 3 to Statement S6, one proceeds through the following steps:

```
F  D( overall while loop ) =
G  D(body of while loop)* U ((M( body) X {a, b}) o
      D( body)*) =
H  { (a,a), (c,c) } U ({a,c) x {a,b} o { (a,a), (c,c) } =
I  { (a,a), (c,c) } U ({{(a,a), (a,b), (c,a), (c,b)} o
      { (a,a), (c,c) } =
J  { (a,a), (c,c) } U {(a,a), (a,b), (c,a), (c,b)} =
K  { (a,a), (c,c), (a,b), (c,a), (c,b) }
```

Step G substitutes textual designations for the terms, such as S and T, contained in Rule 3. The asterisk (*) refers to the transitive closure operation, which has no effect in this case, but which is discussed in a later section.

Step H substitutes the actual sets of dependencies into Rule 3.

Steps I, J, and K are simplifications of Step H. Step K gives the resulting set of dependencies, which is reasonable. Variable a depends on itself: the output "a" of the WHILE-statement may equal "a" (if the condition is not fulfilled), or may equal "a" plus one. A similar concept applies to (c, c).

Variable a depends on "b", because execution of the statement "a = a + 1" depends on the condition, validity of which depends on "b". A similar comment applies to (c, a).

As to (c, a), execution of the statement "c = c + 1" depends on the condition, validity of which depends on "a".

**Modifiable Variables**

Rule 6 states M(while (CONDITION) S) = M(S). "S" refers to the body of the statement, namely, the two assignment statements

$$a = a + 1 \text{ and } c = c + 1.$$

Applying Rule 6 leads to the following sequence of steps:

```
A     M( body of while loop ) =
B         M("a = a + 1; c = c + 1") =
C         M("a = a + 1") U M("c = c + 1") =
D             { a } U { c } =
E             { a, c }
```

Therefore,

$$M( \text{ overall while loop}) = M(\text{body}) = \{a, c\}$$

The set of modifiable variables contains "a" and "c". These are the only variables changed by Statement S6.

## Summary

To obtain all of the dependencies, one performs relational composition on

1. The set of dependencies obtained from composition of the assignment statements with the IF-statement, and

2. The set of dependencies obtained from the WHILE-statement, immediately above.

This produces the following:

```
A  D( D( assignments; IF-statement ) ; while statement ) =
B  D( D( assignments; IF-statement) o D( while statement)=
C  { (a, VAL1), (b, VAL2), (c, VAL3), (d, VAL4),
        (e, VAL1), (e, VAL2), (e, VAL3), (e, VAL4) } o
        { (c, c), (a, a), (a, b), (c, a), (c, b) } =
D    { (a, VAL1), (a, VAL2), (b, VAL2), (c, VAL1), (c,
VAL2),
        (c, VAL3), (d, VAL4), (e, VAL1), (e, VAL2), (e,
VAL3),        (e, VAL4) }
```

Step C substitutes variables into Step B. Step D is a simplification of Step C, and gives the overall set of dependencies.

The overall modifiable variables would be the union of all modifiable variables. However, the modifiable variables were used in intermediate computation steps, such as in Rules 2 and 3, and are not needed for further computation, once the overall set of dependencies is obtained.

**Important Considerations**

1. The variables S and T can be simple variables, or can be structures, as that term is used in the C++ language. The appended code tracks the individual components of structures (but not the individual elements of arrays: arrays are treated as components themselves.) The following procedures provide examples.

```
A      struct msg {int a, b;};
B      void foo (struct msg *p, struct msg *q) {q->a = p->a;}
C      void foo (struct msg *p, struct msg *q)  {
D          if (p->a == 0)
E              q->a = p->b;
F          else
G              q->a = p->a;}
```

Line A is called a type declaration. It can be viewed as stating that whenever an object called "msg" is referenced, that object necessarily has two parts, "a" and "b".

Line B is the original program. It calls up two objects called msg (ie, msg-p and msg-q), each of which, of course, has two parts. Line B assigns the value of the apart of msg-p to the a-part of msg-q. For example, if the a-part of msg-p is the number 6, then the a-part of msg-q becomes six also.

Lines C - G represent the modified program. The modified program makes the assignment of the a-parts conditional. That is, if the a-part of msg-p is zero, then the a-part of msg-q is set equal to the b-part of msg-p. Otherwise, the assignment is the same as in the original program.

The relevance of this example is that the appended program treats expressions like q->a as variables. The reader may wish to view this expression as $q_a$.

2. Transitive closure becomes relevant in a WHILE-statement (or similar statements), wherein statements are repeatedly executed. For example, a WHILE-loop may contain the following statements:

$$a = b$$
$$b = c.$$

If a single pass is made through the loop, then "a" does not depend on "c". However, if a second pass is made, then "a" does depend on "c", because "b" depends on "c", and "a" depends on "b" during the second pass.

Transitive closure increases the elements contained in the set of dependencies to account for this. In this example,

$$D = \{ (a, b), (b, c), (a, c) \}.$$

Transitive closure can be defined as the union of two sets. SET 1 is the union of the dependencies (ie, { (a, b) } U { (b, c) }. SET 2 is the union of relational composition of the dependencies, taken without respect to order. SET 2 is

$$\{ (a, b) \circ (b, c) \} \cup \{ (b, c) \circ (a, b) \}.$$

Transitive closure produces (SET 1) U (SET 2).

3. Union of sets of pairs of elements is defined as follows:

```
D₁ U D₂ :
       { (a, b) | (a, b) ∈ D₁
                    OR
                  (a, b) ∈ D₂
                    OR
          a = b AND (a, x) ∉ D₁ AND (a, x) ∉ D₂ }
```

That is, a pair of elements will be contained in the union of the sets if one (or more) of the following conditions occurs:

(1) The pair (a, b) is an element of $D_1$.

(2) The pair (a, b) is an element of $D_2$.

(3) The variable "a" is equal to "b" AND "a" (which equals "b") is the first element in a pair which is found in either $D_1$ or in $D_2$, but not both.

EP 0 702 299 A1

4. Theory states that any program written in C++ can be reduced to the three types of statements described in the six Rules given above, namely, (1) assignment statements, (2) IF-statements, and (3) WHILE-statements.

To apply the six rules, to compute dependences, one translates the program in question into a program containing only these three types of statements, and applies the six Rules. Such translation is known in the art.

Another approach is possible, Theory states that any program written in C++ can be translated into assembler language which contains only conditional branches. The other approach involves computing dependences of the program, as translated into assembler.

5. Computation of dependences is well known. This Specification provides two examples of computation. The invention is not concerned with the details of such computation, but with comparison of two sets of dependences, taken from two versions of a program, in order to ascertain whether the variables are being processed in the same way in the two versions.

6. It is not required that a computer program be used to enumerate the dependences, nor to compare the dependences once enumerated. A manual approach could be taken. However, the invention is particularly suitable for implementation by a programmed computer.

7. The relational composition eliminates reporting of intermediate variables. One benefit of this elimination is that programs which differ only as to the names of the intermediate variables, but are otherwise the same, will produce identical dependence sets.

Otherwise, if the composition were not undertaken, and the differently named intermediate variables became included in the final dependence sets, these sets would incorrectly indicate differences in the programs where none existed.

## Claims

1. Apparatus for comparing two computer programs, each containing variables, comprising:

   a) means for deriving dependency relations of the variables in each program; and

   b) means for comparing the dependency relations.

2. Apparatus according to claim 1, in which the means for deriving dependency relations does not derive dependency relations for intermediate variables.

3. Apparatus according to claim 1, in which the means for deriving dependency relations eliminates dependency relations for intermediate variables, by performing relational composition on dependence pairs.

4. A method of comparing first and second computer programs, comprising the following steps:

   a) listing input variables of the first program upon which output variables depend;

   b) listing input variables of the second program upon which output variables depend; and

   c) comparing the listings.

5. A method of comparing a first computer program with a second program, comprising the following steps:

   a) for the first program, for each variable, deriving a first list of variables on which the variable depends;

   b) for the second program, for each variable, deriving a second list of variables on which the variable depends; and

   c) comparing the first and second lists.

6. In the comparison of two versions of a computer program, the improvement comprising the following step:

14

a) deriving a list of dependencies of variables in the program, by applying two or more of the following Rules:

Rule 1        D(S;T) = D(T) o D(S);

Rule 2        D(if (CONDITION) S else T) = D(S) U D(T) U [M(s) U M(T)} x {CONDITION};

Rule 3        D(while (CONDITION) S) = D(S)* U ((M(S) X {CONDITION}) o D(S)*);

Rule 4        M(S;T) = M(S) U M(T);

Rule 5        M(if (CONDITION) S else T) = M(S) U M(T);

Rule 6        M(while (CONDITION) S) = M(S);

wherein
      o refers to relational composition,
      U refers to union of sets,
      * refers to transitive closure, and
      x refers to distribution.

*FIG. 1*

```
┌─────────────────────────────────────┐
│ DERIVE SETS OF DEPENDENCIES          │
│   FOR PROGRAM A                      │
│    - FOR ASSIGNMENT STATEMENTS       │
│    - FOR IF STATEMENTS               │
│    - FOR WHILE STATEMENTS            │
└─────────────────────────────────────┘
                   │
                   ▼
┌─────────────────────────────────────┐
│ DERIVE SETS OF DEPENDENCIES          │
│   FOR PROGRAM B                      │
│    - FOR ASSIGNMENT STATEMENTS       │
│    - FOR IF STATEMENTS               │
│    - FOR WHILE STATEMENTS            │
└─────────────────────────────────────┘
                   │
                   ▼
      ┌───────────────────────────────┐
      │ COMPARE SETS FOR A WITH B      │
      └───────────────────────────────┘
                   │
                   ▼
      ┌───────────────────────────────┐
      │   SUMMARIZE DIFFERENCES        │
      └───────────────────────────────┘
```

European Patent
Office

**EUROPEAN SEARCH REPORT**

Application Number

EP 95 30 6217

| DOCUMENTS CONSIDERED TO BE RELEVANT | | | | |
|---|---|---|---|---|
| Category | Citation of document with indication, where appropriate, of relevant passages | | Relevant to claim | CLASSIFICATION OF THE APPLICATION (Int.Cl.6) |
| A | EP-A-0 268 293 (HITACHI LTD.) <br> * column 5, line 37 - column 6, line 5 * <br> --- | | 1 | G06F11/00 |
| A | IEEE TRANSACTIONS ON SOFTWARE ENGINEERING, vol.12, no.1, January 1986, NEW YORK US pages 172 - 181 <br> ZAVDI L. LICHTMAN 'Generation and Consistency Checking of Design and Program Structures' <br> * page 174, left column, line 41 - right column, line 28 * <br> ----- | | 4,5 | |
| | | | | TECHNICAL FIELDS SEARCHED (Int.Cl.6) |
| | | | | G06F |

The present search report has been drawn up for all claims

| Place of search | Date of completion of the search | Examiner |
|---|---|---|
| THE HAGUE | 22 December 1995 | Corremans, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)